(19) Europäisches Patentamt
European Patent Office
Office européen des brevets

(11) EP 4 536 733 B1

(12) EUROPEAN PATENT SPECIFICATION

(45) Date of publication and mention of the grant of the patent:
**06.05.2026 Bulletin 2026/19**

(21) Application number: **23721776.5**

(22) Date of filing: **21.03.2023**

(51) International Patent Classification (IPC):
***C08G 65/48*** *(2006.01)* ***B01D 71/52*** *(2006.01)*
***B01D 69/02*** *(2006.01)* ***B01D 71/82*** *(2006.01)*
***C08J 5/22*** *(2006.01)* ***C08L 71/12*** *(2006.01)*

(52) Cooperative Patent Classification (CPC):
**B01D 71/5223; B01D 69/02; B01D 71/82; C08G 65/485; C08J 5/2256; C08L 71/126;**
B01D 2325/42; C08J 2371/12; Y02E 60/50

(86) International application number:
**PCT/IB2023/052769**

(87) International publication number:
**WO 2023/242637 (21.12.2023 Gazette 2023/51)**

(54) **SULFONATED POLY(PHENYLENE ETHER) AND METHODS FOR THE MANUFACTURE THEREOF**

SULFONIERTE POLY(PHENYLENETHER) UND VERFAHREN ZUR HERSTELLUNG DAVON

POLY(PHÉNYLÈNE ÉTHER) SULFONÉ ET SES PROCÉDÉS DE PRODUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.06.2022 EP 22178729**

(43) Date of publication of application:
**16.04.2025 Bulletin 2025/16**

(73) Proprietor: **SHPP Global Technologies B.V.**
**4612 PX Bergen op Zoom (NL)**

(72) Inventors:
- **CHOWDHURY, Rajesh**
  **Bangalore (IN)**
- **LAMBA, Neha**
  **Bangalore (IN)**
- **MAHESH, Vs**
  **Tumkur (IN)**
- **KANJIRATHADATHIL, Thomas Paul**
  **Bangalore (IN)**
- **VUMMITI, Dharmendra**
  **Bengaluru (IN)**

(74) Representative: **Balder IP Law, S.L.**
**Paseo de la Castellana 93**
**5a planta**
**28046 Madrid (ES)**

(56) References cited:
**WO-A1-2020/254885**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

CROSS REFERENCE TO RELATED APPLICATION

This application claims priority to and the benefit of European Patent Application No. 22178729.4, filed on June 13, 2022.

BACKGROUND

Disclosed herein is a sulfonated poly(phenylene ether) and method for the manufacture thereof.

Poly(phenylene ether)s are commercially attractive materials because of their unique combination of physical, chemical, and electrical properties. Furthermore, the combination of poly(phenylene ether)s with other polymers or additives provides blends which result in improved overall properties including chemical resistance, high strength, and high flow. As new commercial applications are explored, various sulfonated grades of poly(phenylene ether) materials are desired.

Conventional methods for sulfonating poly(phenylene ether) develop heterogeneity with progressive levels of sulfonation, affecting the reaction system making further sulfonation difficult. Sulfonation of poly(phenylene ether) can also lead to degradation of molecular weight and result in the presence of residual reaction byproducts. A method for sulfonation of poly(phenylene ether) to prepare a sulfonated poly(phenylene ether) having a sulfonation degree of 20 to 50% is disclosed in WO2020/254885 A1.

It would be desirable to provide an improved process for sulfonating poly(phenylene ether) which can provide high sulfonation levels (e.g., up to 50%) and reduced sulfonyl chloride content. It would be a further advantage to retain high molecular weight polymers after sulfonation, with low oligomer content.

SUMMARY

A sulfonated poly(phenylene ether) represents an aspect of the present disclosure. The sulfonated poly(phenylene ether) comprises repeating units of the formula

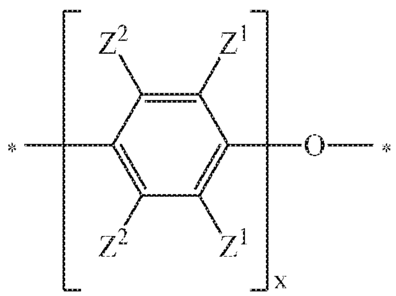

a degree of sulfonation of 20 to 50% as determined by nuclear magnetic resonance spectroscopy; and a sulfonyl chloride ($-SO_2Cl$):sulfonic acid ($-SO_3H$) molar ratio of less than or equal to 0.06; wherein in the foregoing formula, $Z^1$ is independently at each occurrence a sulfonic acid group, a sulfonyl chloride group, halogen, unsubstituted or substituted $C_{1-12}$ hydrocarbyl provided that the hydrocarbyl group is not tertiary hydrocarbyl, $C_{1-12}$ hydrocarbylthio, $C_{1-12}$ hydrocarbyloxy, or $C_{2-12}$ halohydrocarbyloxy wherein at least two carbon atoms separate the halogen and oxygen atoms; $Z^2$ is independently at each occurrence a sulfonic acid group, a sulfonyl chloride group, hydrogen, halogen, unsubstituted or substituted $C_{1-12}$ hydrocarbyl provided that the hydrocarbyl group is not tertiary hydrocarbyl, $C_{1-12}$ hydrocarbylthio, $C_{1-12}$ hydrocarbyloxy, or $C_{2-12}$ halohydrocarbyloxy wherein at least two carbon atoms separate the halogen and oxygen atoms; and x is 1 or 2.

Another aspect is a method of making the sulfonated poly(phenylene ether), the method comprises dissolving a poly(phenylene ether) in 1,2-dichloroethane to form a mixture; combining a sulfonating agent and a cosolvent, preferably ethyl acetate, with the mixture to form the sulfonated poly(phenylene ether), wherein nitrogen gas is passed over the mixture at a flow rate of greater than or equal to 30 milliliters per minute per mole of sulfonating agent; precipitating the sulfonated poly(phenylene ether); and isolating the precipitated sulfonated poly(phenylene ether).

Another aspect is a membrane comprising the sulfonated poly(phenylene ether).

Another aspect is a precursor to porous carbon, the precursor comprising the sulfonated poly(phenylene ether).

The above described and other features are exemplified by the following detailed description.

## BRIEF DESCRIPTION OF THE DRAWINGS

Referring now to the drawings which are exemplary and not limiting.
FIG. 1 is a schematic drawing of an embodiment of a method for sulfonating poly(phenylene ether).

## DETAILED DESCRIPTION

Methods have been developed to reliably sulfonate poly(phenylene ether) to degrees of sulfonation ranging from 20 to 50%. Advantageously, the sulfonated poly(phenylene ethers) include low levels of sulfonyl chloride, as well as reduced amounts of oligomeric impurities. The sulfonated poly(phenylene ethers) can retain high molecular weight (e.g., a number average molecular weight of greater than 60,000 grams per mole), with low (e.g., less than 1 weight percent) oligomer content. The sulfonated poly(phenylene ether) having a low sulfonyl chloride content can provide improved ion exchange capacity (IEC). The process is also scalable and allows for the production of poly(phenylene ether) with different sulfonation levels. Homogenous sulfonation is also possible.
Accordingly, an aspect of the present disclosure is a sulfonated poly(phenylene ether). The sulfonated poly(phenylene ether) comprises repeating units of the formula

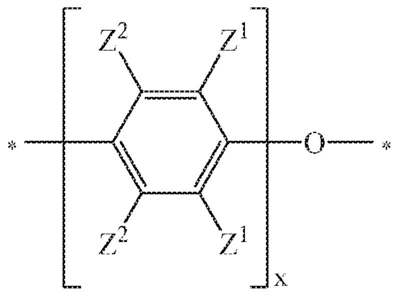

wherein in the foregoing formula, $Z^1$ is independently at each occurrence a sulfonic acid group, a sulfonyl chloride group, halogen, unsubstituted or substituted $C_{1-12}$ hydrocarbyl provided that the hydrocarbyl group is not tertiary hydrocarbyl, $C_{1-12}$ hydrocarbylthio, $C_{1-12}$ hydrocarbyloxy, or $C_{2-12}$ halohydrocarbyloxy wherein at least two carbon atoms separate the halogen and oxygen atoms; $Z^2$ is independently at each occurrence a sulfonic acid group, a sulfonyl chloride group, hydrogen, halogen, unsubstituted or substituted $C_{1-12}$ hydrocarbyl provided that the hydrocarbyl group is not tertiary hydrocarbyl, $C_{1-12}$ hydrocarbylthio, $C_{1-12}$ hydrocarbyloxy, or $C_{2-12}$ halohydrocarbyloxy wherein at least two carbon atoms separate the halogen and oxygen atoms; and x is 1 or 2. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, $Z^1$ can be a di-n-butylaminomethyl group formed by reaction of a terminal 3,5-dimethyl-1,4-phenyl group with the di-n-butylamine component of an oxidative polymerization catalyst.
In an aspect, x in the foregoing formula can be 1, and the sulfonated poly(phenylene ether) comprises repeating units of the formula

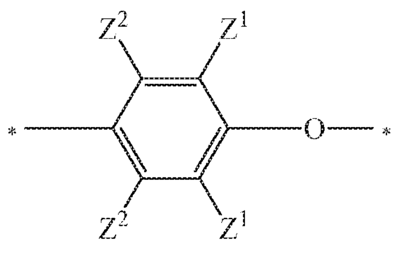

wherein $Z^1$ and $Z^2$ are as defined above.
In an aspect, x in the foregoing formula can be 2, and the sulfonated poly(phenylene ether) can comprise repeating units of the formula

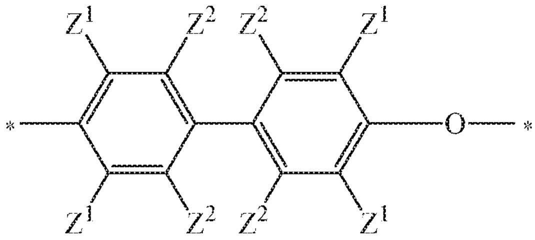

wherein $Z^1$ and $Z^2$ are as defined above.

The sulfonated poly(phenylene ether) of the present disclosure is sulfonated and as such, it will be understood that at least a portion of $Z^1$ or $Z^2$ is replaced with a sulfo group (e.g., a sulfonic acid group or a sulfonyl chloride group).

In an aspect, the poly(phenylene ether) can comprise 2,6-dimethyl-1,4-phenylene ether repeating units, 2,3,6-trimethyl-1,4-phenylene ether units, 2,5-dimethyl-1,4-phenylene ether repeating units, 2,2',5,5'-tetramethyl-4,4'-dihydroxybiphenyl ether repeating units, 2-methyl-6-phenyl-1,4-phenylene ether repeating units, 2,2'-dimethyl-6,6'-diphenyl-4,4'-dihydroxybiphenyl ether repeating units, 2,6-diphenyl-1,4-phenylene ether repeating units, 2,2',6,6'-tetraphenyl-4,4'-dihydroxybiphenyl ether repeating units, 2,6-dimethoxy-1,4-phenylene ether repeating units, 2,2'-6,6'-tetramethoxy-4,4'-dihydroxybiphenyl ether, 3,3',5,5'-tetramethyl-4,4'-dihydroxybiphenyl ether units, a sulfonated derivative thereof, or a combination thereof. The term "a sulfonated derivative thereof" as used herein refers to the foregoing repeating units having at least one substituent replaced by a sulfo group. For example, the sulfonated poly(phenylene ether) can comprise 2,6-dimethyl-3-sulfo-1,4-phenylene ether repeating units, 2,5-dimethyl-3-sulfo-1,4-phenylene ether repeating units, 2,2',5,5'-tetramethyl-3-sulfo-4,4'-dihydroxybiphenyl ether repeating units, 2-methyl-6-phenyl-3-sulfo-1,4-phenylene ether repeating units, 2,2'-dimethyl-6,6'-3-sulfo-diphenyl-4,4'-dihydroxybiphenyl ether repeating units, 2,6-diphenyl-3-sulfo-1,4-phenylene ether repeating units, 2,2',6,6'-tetraphenyl-3-sulfo-4,4'-dihydroxybiphenyl ether repeating units, 2,6-dimethoxy-3-sulfo-1,4-phenylene ether repeating units, 2,2'-6,6'-tetramethoxy-3-sulfo-4,4'-dihydroxybiphenyl ether, and the like or a combination thereof.

In an aspect, the sulfonated poly(phenylene ether) can comprise 2,6-dimethyl-1,4-phenylene ether units and 2,6-dimethyl-3-sulfo-1,4-phenylene ether repeating units. Stated another way, the sulfonated poly(phenylene ether) can be a sulfonated poly(2,6-dimethyl-1,4-phenylene ether).

The sulfonated poly(phenylene ether) has a degree of sulfonation of 20 to 50%. As further described in detail below, degree of sulfonation can be determined, for example, using proton nuclear magnetic resonance ($^1H$ NMR) spectroscopy. Accordingly, at least one occurrence of $Z^1$ or $Z^2$ in the foregoing formulas is a sulfo group in at least 20% of the repeating units of the sulfonated poly(phenylene ether). Within this range, the sulfonated poly(phenylene ether) can have a degree of sulfonation of 20 to 50%, or 20 to 45%, or 20 to 40%, or 20 to 35%.

The sulfonated poly(phenylene ether) can optionally comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present.

The poly(phenylene ether) from which the sulfonated poly(phenylene ether) can be prepared can be in the form of a homopolymer, a copolymer, a graft copolymer, an ionomer, a block copolymer, or an oligomer as well as combinations thereof. In an aspect, the poly(phenylene ether) from which the sulfonated poly(phenylene ether) can be a poly(2,6-dimethyl-1,4-phenylene ether) having an intrinsic viscosity of 0.03 to 2 deciliter per gram (dl/g). For example, the poly(phenylene ether) can have an intrinsic viscosity of 0.25 to 1.7 dl/g, specifically 0.25 to 0.7 dl/g, more specifically 0.35 to 0.55 dl/g, even more specifically 0.35 to 0.50 dl/g, measured at 25°C in chloroform using an Ubbelohde viscometer.

The sulfonated poly(phenylene ether) advantageously has a low sulfonyl chloride content. Specifically, the sulfonated poly(phenylene ether) has a sulfonyl chloride ($-SO_2Cl$):sulfonic acid ($-SO_3H$) molar ratio of less than or equal to 0.06. For example, the sulfonyl chloride ($-SO_2Cl$):sulfonic acid ($-SO_3H$) molar ratio can be less than or equal to 0.05, or less than 0.05, or less than or equal to 0.04, or greater than 0 to 0.04, or 0.001 to 0.04, or 0.01 to 0.04, or 0.02 to 0.04, or 0.03 to 0.04.

In an aspect, the sulfonated poly(phenylene ether) can have a degree of sulfonation as it pertains to sulfonyl chloride groups of less than 1.25%. Stated another way, the sulfonated poly(phenylene ether) comprises less than 1.25 sulfonyl chloride groups per 100 repeating units. Within this range, the sulfonated poly(phenylene ether) can have a degree of sulfonation as it pertains to sulfonyl chloride groups of less than or equal to 1.2%, for example 0.1 to 1.2%.

The sulfonated poly(phenylene ether) can have a number average molecular weight of 60,000 to 100,000 grams per mole, a weight average molecular weight of 130,000 to 200,000 grams per mole, and a dispersity of 1.8 to 2.5. Number average molecular weight, weight average molecular weight, and dispersity are determined using gel permeation chromatography in dimethyl formamide relative to polystyrene standards, as further described in the working examples below.

The sulfonated poly(phenylene ether) can comprise reduced levels of oligomers. As used herein, the term "oligomer" refers to phenylene ether molecules having a molecular weight of less than 1000 atomic mass units (amu; used interchangeably with Daltons (Da) or grams per mole (g/mol)). For example, the sulfonated poly(phenylene ether) can comprise less than 1 weight percent, or less than 0.75 weight percent, or less than 0.5 weight percent of an oligomer having a molecular weight of less than 1,000 grams per mole, wherein weight percent is based on the total weight of the sulfonated poly(phenylene ether). In an aspect, the sulfonated poly(phenylene ether) can comprise less than 0.7 weight percent, or less than 0.5 weight percent, or less than 0.4 weight percent of an oligomer having a molecular weight of less than 500 grams per mole, wherein weight percent is based on the total weight of the sulfonated poly(phenylene ether).

The sulfonated poly(phenylene ether) can advantageously exhibit an ion exchange capacity (IEC) of 1.2 to 2.5, or 1.5 to 2.5 milliequivalents per gram of sulfonated poly(phenylene ether). Unexpectedly, the present inventors found that lower levels of sulfonyl chloride in the sulfonated poly(phenylene ether) can provide improved IEC. Reduced sulfonyl chloride content was advantageously found to correlate to the flow rate of an overhead nitrogen sweep, as further described below.

In a specific aspect, the sulfonated poly(phenylene ether) can comprise sulfonated 2,6-dimethyl-1,4-phenylene ether units. The sulfonated poly(phenylene ether) can have a degree of sulfonation of 20 to 35%. The sulfonated poly(phenylene ether) can have a sulfonyl chloride ($-SO_2Cl$):sulfonic acid ($-SO_3H$) molar ratio of 0.01 to 0.04. In an aspect, the sulfonated poly(phenylene ether) can have a sulfonyl chloride ($-SO_2Cl$) content of less than 1.2%, preferably 0.1 to less than 1.2%. The sulfonated poly(phenylene ether) can comprise less than 0.5 weight percent of an oligomer having a molecular weight of less than 1,000 grams per mole, wherein weight percent is based on the total weight of the sulfonated poly(phenylene ether). The sulfonated poly(phenylene ether) can have a number average molecular weight of 60,000 to 100,000 grams per mole, a weight average molecular weight of 130,000 to 200,000 grams per mole, a dispersity of 1.8 to 2.5, and an ion exchange capacity of 1.2 to 2.5 milliequivalents per gram of sulfonated poly(phenylene ether), preferably 1.5 to 2.5 milliequivalents per gram of sulfonated poly(phenylene ether).

The sulfonated poly(phenylene ether) can be prepared by a method comprising dissolving a poly(phenylene ether) in 1,2-dichloroethane to form a mixture. The poly(phenylene ether) starting material can include a poly(phenylene ether) comprising repeating structural units having the formula

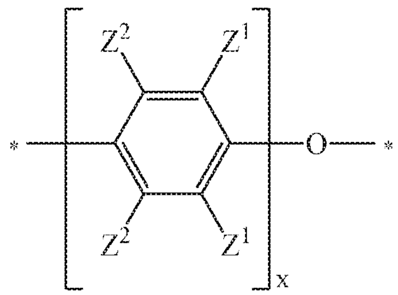

wherein each occurrence of $Z^1$ independently comprises halogen, unsubstituted or substituted $C_{1-12}$ hydrocarbyl provided that the hydrocarbyl group is not tertiary hydrocarbyl, $C_{1-12}$ hydrocarbylthio, $C_{1-12}$ hydrocarbyloxy, or $C_{2-12}$ halohydrocarbyloxy wherein at least two carbon atoms separate the halogen and oxygen atoms; each occurrence of $Z^2$ independently comprises hydrogen, halogen, unsubstituted or substituted $C_{1-12}$ hydrocarbyl provided that the hydrocarbyl group is not tertiary hydrocarbyl, $C_{1-12}$ hydrocarbylthio, $C_{1-12}$ hydrocarbyloxy, or $C_{2-12}$ halohydrocarbyloxy wherein at least two carbon atoms separate the halogen and oxygen atoms; and x is 1 or 2. In an aspect, $Z^1$ can be a di-n-butylaminomethyl group formed by reaction of a terminal 3,5-dimethyl-1,4-phenyl group with the di-n-butylamine component of an oxidative polymerization catalyst.

In an aspect, the poly(phenylene ether) can comprise 2,6-dimethyl-1,4-phenylene ether repeating units, 2,3,6-trimethyl-1,4-phenylene ether units, 2,5-dimethyl-1,4-phenylene ether repeating units, 2,2' ,5,5' -tetramethyl-4,4' -dihydroxybiphenyl ether repeating units, 2-methyl-6-phenyl-1,4-phenylene ether repeating units, 2,2'-dimethyl-6,6'-diphenyl-4,4'-dihydroxybiphenyl ether repeating units, 2,6-diphenyl-1,4-phenylene ether repeating units, 2,2',6,6'-tetraphenyl-4,4'-dihydroxybiphenyl ether repeating units, 2,6-dimethoxy-1,4-phenylene ether repeating units, 2,2'-6,6'-tetramethoxy-4,4'-dihydroxybiphenyl ether, 3,3',5,5'-tetramethyl-4,4'-dihydroxybiphenyl ether units, or a combination thereof, preferably 2,6-dimethyl-1,4-phenylene ether units (i.e., in an aspect, the poly(phenylene ether) is a poly(2,6-dimethyl-1,4-phenylene ether)). For example, the poly(phenylene ether) can comprise a poly(2,6-dimethyl-1,4-phenylene ether) having an intrinsic viscosity of 0.03 to 2 deciliter per gram (dl/g). Within this range, the poly(phenylene ether) can have an intrinsic viscosity of 0.25 to 1.7 dl/g, specifically 0.25 to 0.7 dl/g, more specifically 0.35 to 0.55 dl/g, even more specifically 0.35 to 0.50 dl/g, measured at 25°C in chloroform using an Ubbelohde viscometer.

In an aspect, the poly(phenylene ether) can comprise molecules having aminoalkyl-containing end group(s), typically located in a position ortho to the hydroxy group. Also frequently present are tetramethyldiphenoquinone (TMDQ)

end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, a block copolymer, or an oligomer as well as combinations thereof.

The mixture of the poly(phenylene ether) and the solvent can be provided at a temperature of 10 to 85°C, e.g., 10 to 60°C, or 25 to 40°C. The 1,2-dichloroethane can be present in a sufficient quantity to dissolve the poly(phenylene ether). In an aspect, the mixture can comprise 1 to 20 wt% of the poly(phenylene ether); and 80 to 99 wt% of the 1,2-dichloroethane.

The solvent mixture can then be combined with a sulfonating agent to sulfonate the poly(phenylene ether). Combining of the solvent mixture and the sulfonating agent is further in the presence of a cosolvent, which is preferably ethyl acetate. Alternative exemplary cosolvents can be as described, for example, in International Publication No. 2020/254885**.**

The sulfonation reaction can be performed at a temperature of up to 85°C, e.g., 10 to 85°C, or 10 to 60°C, or 25 to 40°C. The amount of sulfonating agent added to the solvent mixture can be 0.5 to 1 mole, preferably 0.25 to 0.9 moles, per mole of poly(phenylene ether) that was dissolved in the solvent mixture. The specific amount of sulfonating agent added is dependent upon the desired level of sulfonation in the sulfonated reaction product. The sulfonating agent can be added slowly to the solvent mixture, e.g., added over a period of 15 to 60 minutes (min), (e.g., over a period of 30 mins). Once the sulfonating agent and cosolvent are combined with the solvent mixture, the resulting reaction mixture can be stirred, e.g., for a period of time of 60 to 210 mins, prior to proceeding to precipitation. The stirring can be at an agitation rate effective to maintain the reaction mixture as homogenous, for example at an agitation rate of 50 to 1,000 revolutions per minute (RPM). In an aspect, the agitation rate can be selected to provide an impeller tip speed of 1 to 8 meters per second (m/s), or 1 to 5 m/s, or 2 to 4 m/s.

The sulfonating agent is preferably added together with a cosolvent, which can desirably prevent precipitation of the sulfonated poly(phenylene ether) before the desired degree of sulfonation has been attained. The sulfonating agent and the cosolvent can preferably be present in a weight ratio of 1:1.5 to 1.5 to 1, preferably 1:1.1 to 1.1:1.

During the sulfonation reaction, nitrogen gas can be flowed over the reaction mixture. Without wishing to be bound by theory, it is believed that flowing the nitrogen gas over the reaction mixture at a particular rate can aid in reducing the amount of sulfonyl chloride groups in the sulfonated product, for example by removing HCl byproduct. In an aspect, the nitrogen gas can be passed over the mixture at a flow rate of greater than or equal to 20 milliliters per minute per mole of sulfonating agent. Within this range, the nitrogen gas can be passed over the reaction mixture at a flow rate of 20 to 1500 milliliters per minute per mole of sulfonating agent, or 25 to 1500 milliliters per minute per mole of sulfonating agent, or 25 to 1300 milliliters per minute per mole of sulfonating agent, or 25 to 1050 milliliters per minute per mole of sulfonating agent, or 25 to 250 milliliters per minute per mole of sulfonating agent. The foregoing nitrogen gas flow rates can be for reactor occupancies of greater than or equal to 30%.

The sulfonated poly(phenylene ether) can be precipitated from the solvent mixture using an anti-solvent mixture, e.g., containing deionized (DI) water. In an aspect, at least one of hexane, heptane, can be used, e.g., along with deionized water, to precipitate the sulfonated poly(phenylene ether) out of the reaction mixture. The reaction mixture can be (e.g., slowly) added to the anti-solvent mixture, wherein the anti-solvent mixture can be used in an amount sufficient to induce precipitation. For example, 100 grams (g) reaction mixture can be added to 300 to 700 g, preferably 390 to 595 g, of the anti-solvent mixture with hexane to water weight ratios ranging from 0 to 1.15.

The precipitated sulfonated poly(phenylene ether) can be filtered, and optionally washed and dried. The filtrate can be diphasic with the 1,2-dichloroethane, cosolvent, and optionally organic(s) (e.g., hexane) that were part of the anti-solvent mixture, as the organic phase and water as the aqueous phase. Hence, the filtrate can be further processed to recover at least one of the 1,2-dichloroethane, the cosolvent, or water; preferably to recover 1,2-dichloroethane and the cosolvent, more preferably to recover 1,2-dichloroethane, the cosolvent, and the water. Recovering the materials can comprise decanting the diphasic filtrate to form an aqueous stream and an organic stream. The organic stream can be further processed, e.g., distilled, to recover the 1,2-dichloroethane and/or the cosolvent. The recovered materials can be recycled.

An exemplary process for the manufacture of the sulfonated poly(phenylene ether) according to the present disclosure is schematically illustrated in FIG. 1. As is illustrated, the process entails introducing a poly(phenylene ether) and 1,2-dichloroethane to a mixing vessel 10. The mixing vessel 10 can be maintained at room temperature up to 85 °C, e.g., 30°C to 85°C, or 30 to 60°C, preferably 30°C to 45°C. Within the mixing vessel 10, the poly(phenylene ether) and 1,2-dichloroethane can be mixed, e.g., until homogenous, to form the solvent mixture. Optionally, the mixing can continue until a homogenous clear solution is obtained. From the mixing vessel 10, the solvent mixture can be processed in a reaction vessel 20 along with a sulfonating agent and a cosolvent (e.g., ethyl acetate). Nitrogen gas can be passed over the reaction mixture in reaction vessel 20 to facilitate a low degree of sulfonyl chloride. The sulfonated poly(phenylene ether) can then be precipitated from the mixture in a precipitation unit 30, e.g., once the desired degree of sulfonation has been attained. For example, the reaction solvent mixture can be slowly added to the anti-solvent mixture (e.g., of hexane and DI water) to induce precipitation of the sulfonated poly(phenylene ether). The precipitated sulfonated poly(phenylene ether) can be

separated from the liquid phase, e.g., in filtration unit 40, before the sulfonated poly(phenylene ether) is optionally washed (such as with DI water), e.g., in wash units 50, 52, and dried, e.g., in drier 54. The wash from the wash units 50,52 can optionally be separated in decantation unit 56, into an aqueous stream and a hexane stream. The hexane stream can optionally be recycled to the reslurry unit 50. Meanwhile, the liquid phase from the filtration unit 40 can be processed to remove water, e.g., in decantation unit 60 using liquid-liquid separation. The aqueous recovery phase from the decantation unit 60 and from decantation unit 56 can be processed in a multiple effect evaporator (MEE) 70 to recover the water. The resulting water can optionally be recycled, e.g., to the reslurry unit 50, the wash unit 52, or the precipitation unit 30; and preferably to the reslurry unit 50. The 1,2-dichloroethane (EDC) stream from the decantation unit 60 can be further processed to separate the EDC by distillation in unit 80. The separated EDC can optionally be recycled, e.g., to mixing vessel 10.

The sulfonated poly(phenylene ether) can be useful for a variety of products. For example, the sulfonated poly(phenylene ether) can be useful for ion exchange membranes (e.g., for dialysis), proton conducting membranes (e.g., for polymer electrolyte membrane fuel cells), ion exchange membranes for flow batteries, hollow fiber membranes, precursor for molecular sieve carbon membranes for gas separation, precursor for carbon electrodes for fuel cells, carbon membrane reactors, and the like. Accordingly, a membrane comprising the sulfonated poly(phenylene ether) represents another aspect of the present disclosure. Membranes comprising the sulfonated poly(phenylene ether) can be prepared, for example, by casting a film comprising the sulfonated poly(phenylene ether), optionally on a substrate. Exemplary substrates can include, for example, woven synthetic fabrics (e.g., polypropylene cloth, polyacrylonitrile cloth, polyacrylonitrile-co-vinyl chloride cloth, polyvinyl chloride cloth, polyester cloth, and the like), glass filter cloth, polyvinylidene chloride screen, glass paper, treated cellulose battery paper, polystyrene-coated glass fiber mat, polyvinyl chloride battery paper, and the like. Any suitable casting process can be used, for example, solution casting, drop casting, spin coating, doctor blading, roller coating, and the like or a combination thereof. The membrane preferably comprises at least one layer comprising the sulfonated poly(phenylene ether). A precursor to a porous carbon represents another aspect of the present disclosure. The porous carbon can be useful, for example, as a molecular sieve carbon membrane for gas separation. The porous carbon molecular sieve membrane can be made, for example, by pyrolyzing a precursor polymer comprising the sulfonated poly(phenylene ether) of the present disclosure. The porous carbon can have micropores (e.g., having a diameter of 0.01 micrometers or less), macropores (e.g., having a diameter of 0.01 to 100 micrometers), or a combination thereof.

This disclosure is further illustrated by the following examples, which are nonlimiting.

EXAMPLES

The following exemplary procedure was used to prepare sulfonated poly(phenylene ether).

A reactor equipped with a stirrer was maintained at 40°C. Poly(phenylene ether) (PPE) resin (10 parts by weight) was dissolved in a 1,2-dichloroethane (93.9 parts by weight) until a homogenous clear solution was obtained (e.g., 60 minutes). The relative proportions of the poly(phenylene ether) and 1,2-dichloroethane can be varied as further described below. The temperature was maintained at 40°C. Chlorosulfonic acid (5.7 parts by weight) and ethyl acetate (6.1 parts by weight) were transferred to the reactor under vigorous stirring and over a 40 minute period. The relative proportions of the chlorosulfonic acid and ethyl acetate can also be varied depending on the desired degree of sulfonation, as further described below. A nitrogen purge was maintained through the headspace of the reaction mixture, and rapid stirring was maintained. The rate of nitrogen flow through the headspace of the reaction mixture was varied, as further described below. Once a desired degree of sulfonation was obtained, as determined by proton nuclear magnetic resonance ($^1$H NMR) spectroscopy, the reaction mixture was subsequently slowly transferred to a washing vessel including DI water (500 milliliters) at a temperature of 10°C and fitted with a 4-blade of agitator of approximately 60 mm diameter, running at 1,000 rpm giving a tip-speed of 3.14 m/s. The temperature was subsequently ramped up to 25°C after 1 hour. The stirring was continued for a total of 30 min. This was followed by filtration. The residue (sPPE) was then reslurried in DI water/hexane mixture (200 milliliters DI water; 19.7 milliliters hexane) and refiltered. The residue was washed thoroughly with DI water (200 milliliters each wash) until a neutral pH was obtained, as determined with potentiometric titration. The sulfonated material was then dried under vacuum for up to 72 hours at room temperature (e.g., 25°C).

The degree of substitution (also referred to as the degree of sulfonation or the sulfonation level) indicates the percentage of repeat units bearing the sulfonic acid group along the sulfonated polymer molecular chain. The degree of substitution (DS) was determined by nuclear magnetic resonance (NMR) spectroscopy. The samples were dissolved in dimethyl sulfoxide-$d_6$ (DMSO-$d_6$, also known as deuterated DMSO) (with the help of overnight shaking in a horizontal shaker), 32 scans were averaged with 5 seconds delay. In case of undissolved portions, the solvent vial was sonicated in a water bath at 45°C for 15-30 minutes.

The degree of sulfonation can be calculated either from the aliphatic or aromatic protons:

considering aromatic protons:

$$DS\% = \frac{I3}{(0.5 * I2) + I3}$$

considering aliphatic protons:

$$DS\% = \frac{2 * I6}{I6 + I7}$$

wherein I is the integration value of the NMR chemical shifts at a given ppm.

Molecular weight of the sulfonated poly(phenylene ether) was determined by gel permeation chromatography (GPC) using dimethyl formamide as a mobile phase with 0.1 wt%, based upon the weight of the mobile phase, of lithium bromide as an additive. Agilent 2 x (e.g., 2 columns) PLgel 5 micrometer ($\mu$m) MIXED-B, 300 x 7.5 mm, with one guard, column was used for the elution of sPPE with 1 milliliter per minute (ml/min) flow rate and 50°C of column temperature. Ultraviolet (UV) detector (at 275 nanometers (nm)) was used to record the GPC chromatogram of sPPE, with an elution time of 30 min. Samples were slowly dissolved in the dimethyl formamide solvent at a concentration of 3 milligram per milliliter (mg/ml) for about 4 to 6 hours in a horizontal shaker. The solutions were filtered through a 0.45 $\mu$m PTFE filter into a GPC auto sampler vial for analysis. The GPC system was calibrated with polystyrene standards in the range of to 580 Dalton (Da) to 6570 kDa. Shimadzu Labsolution Software was used to set the baseline points. Dispersity index (Đ) was determined according to:

$$Đ = {}^{Mw}/_{Mn}$$

Oligomer content was determined using slice data generated by GPC software and the GPC chromatograms obtained for each sample using the method described above. The software was used to "slice" the chromatogram and to calculate the molecular weights and content of each slice. The oligomer content for oligomers having a molecular weight of <1000 amu and <500 amu was determined for each sample.

As shown in Table 2 below, the procedure described herein provided sulfonated poly(phenylene ether) having a high degree of sulfonation (e.g., greater than 15%), retaining high molecular weight (e.g., Mn greater than 60,000 grams/mole), and having low levels of residual oligomers.

Table 2

| | Unit | E1 | E2 | E3 | E4 | E5 | E6 | E7 | E8 | E9 |
|---|---|---|---|---|---|---|---|---|---|---|
| Batch Size | g of PPO | 10 | 50 | 50 | 50 | 250 | 250 | 250 | *250* | 8750 |
| EDC/PPO | wt/wt | 9.39 | 9.39 | 9.39 | 9.39 | 9.39 | 9.39 | 9.39 | 9.39 | 9.39 |
| EA/PPO | wt/wt | 0 | 0.61 | 0.61 | 0.61 | 0.61 | 0.61 | 0.61 | 0.61 | 0.61 |
| CSA/PPO | wt/wt | 0.45 | 0.57 | 0.57 | 0.57 | 0.57 | 0.57 | 0.57 | 0.57 | 0.512 |
| Total DS | % | 16.4 | 28.5 | 27.7 | 30.3 | 29.1 | 28.7 | 27.4 | 30 | 31.8 |
| Mn | g/mol | 69500 | 77200 | 81700 | 82200 | 90100 | 77400 | 96250 | 78100 | 88500 |
| Mw | g/mol | 274500 | 156000 | 175000 | 173700 | 187400 | 159000 | 189500 | 160200 | 185300 |
| PDI | | 4.0 | 2.1 | 2.1 | 2.1 | 2.1 | 2.1 | 2.0 | 2.1 | 2.1 |
| Oligomer (<500amu) | wt% | 0.75 | 0.37 | 0.15 | 0.17 | 0.08 | 0.01 | 0.09 | 0.28 | 0.15 |
| Oligomer (<1000 amu) | wt% | 1.34 | 0.44 | 0.20 | 0.22 | 0.12 | 0.02 | 0.14 | 0.39 | 0.21 |

Table 2 (cont.)

| | Unit | E10 | E11 | E12 | E13 | E14 | E15 | E16 | E17 |
|---|---|---|---|---|---|---|---|---|---|
| Batch Size | g of PPO | 8750 | 8750 | 8750 | 10 | 10 | 1000 | 10 | 10 |
| EDC/PPO | wt/wt | 9.39 | 9.39 | 9.39 | 9.39 | 9.39 | 9.39 | 9.39 | 9.39 |
| EA/PPO | wt/wt | 0.61 | 0.61 | 0.61 | 0.30 | 0.61 | 0.61 | 0.61 | 0.61 |
| CSA/PPO | wt/wt | 0.49 | 0.47 | 0.45 | 0.45 | 0.45 | 0.57 | 0.57 | 0.57 |
| Total DS | % | 26.1 | 24.6 | 22.7 | 16.8 | 17.5 | 23.2 | 28.4 | 29.6 |
| Mn | g/mol | 76500 | 79650 | 67500 | 60800 | 60000 | 62000 | 77600 | 78100 |
| Mw | g/mol | 164200 | 182200 | 167300 | 136600 | 137300 | 139900 | 158700 | 160200 |
| PDI | | 2.1 | 2.3 | 2.5 | 2.2 | 2.3 | 2.3 | 2.0 | 2.1 |
| Oligomer (<500amu) | wt% | 0.13 | 0.10 | 0.11 | 0.5 | 0.18 | 0.12 | 0.54 | 0.55 |
| Oligomer (<1000 amu) | wt% | 0.18 | 0.17 | 0.19 | 0.74 | 0.27 | 0.18 | 0.60 | 0.63 |

Without wishing to be bound by theory, it is believed that the presence of sulfonyl chloride groups in the sulfonated poly(phenylene ether) do not contribute to the ion exchange capacity of the material. Accordingly, it would be advantageous to provide a sulfonated poly(phenylene ether) having a reduced sulfonyl chloride content in an effort to provide a material having an improved ion exchange capacity.

To this end, the present inventors sought to reduce sulfonyl chloride content using an overhead nitrogen sweep to minimize or eliminate sulfonyl chloride formation in the sulfonated poly(phenylene ether) product. As shown in Table 3, the present inventors unexpectedly found that the rate at which the nitrogen is passed over the reaction mixture can affect the sulfonyl chloride content in the resulting sulfonated poly(phenylene ether). Advantageously, sulfonated poly(phenylene ether) having reduced sulfonyl chloride content was found to provide improved IEC.

The IEC indicates the number of milliequivalents of ions in 1 g of the dry polymer. IEC was determined by dissolving the sPPE in a dimethyl acetamide/isopropyl alcohol mixture and titrating with alcoholic potassium hydroxide by potentiometric method. This nonaqueous titration was performed with Solvatrode (commercially available from Metrohm USA) as the electrode. This method uses a two solvent system. Consequently, a sharp and reproducible end point is obtained.

The sample was dissolved in the dimethyl acetamide and was diluted with the isopropyl alcohol to get reproducible ion exchange capacity. With only dimethyl acetamide, no sharp end point was obtained with considerable variability in replicate analysis. Not to be limited by theory, it is believed that this bi-solvent system helps in controlling the polarity and enables attaining a reproducible, sharp end point.

$$\text{Ion exchange capacity}\left({}^{meq}/_{g}\right) = \frac{(B - A)N}{S}$$

Where: A = volume in ml of 0.1N potassium hydroxide (KOH) solution required for titration;
B = volume in ml of 0.1N KOH solution required for blank;
F = normality of 0.1 N KOH solution; and
S = sample weight in grams.

Concentrations of sulfonic acid ($SO_3H$) and sulfonyl chloride ($SO_2Cl$) groups were determined by measuring the total concentrations of elemental sulfur (S) and chlorine (Cl) using elemental analysis using CHNS and combustion ion chromatography, respectively. Free amounts of elemental S (measured as sulfate) and Cl (measured at chloride) were determined using extractible ion chromatography.

Table 3 below provides the amounts or ratios of the various reaction components for Examples 2-12, and further examines the effect of nitrogen sweep rate on sulfonyl chloride content. The amounts of various residual components, the degree of sulfonation, and the ion exchange capacity (IEC) for each Example are provided.

Table 3

| | Unit | E2 | E3 | E4 | E5 | E6 |
|---|---|---|---|---|---|---|
| Batch Size | g of PPO | 50 | 50 | 50 | 250 | 250 |

(continued)

| | Unit | E2 | E3 | E4 | E5 | E6 |
|---|---|---|---|---|---|---|
| EDC/PPO | wt/wt | 9.39 | 9.39 | 9.39 | 9.39 | 9.39 |
| EA/PPO | wt/wt | 0.61 | 0.61 | 0.61 | 0.61 | 0.61 |
| CSA/PPO | wt/wt | 0.57 | 0.57 | 0.57 | 0.57 | 0.57 |
| $N_2$ sweep rate | ml/min | 50 | 50 | 50 | 100 | 100 |
| Normalized $N_2$ sweep rate | (ml/min)/ mol CSA | 204.4 | 204.4 | 204.4 | 81.8 | 81.8 |
| Agitation | RPM | 250 | 250 | 250 | 250 | 250 |
| Total DS | % | 28.5 | 27.7 | 30.3 | 29.1 | 28.7 |
| Total S | eqv/g | 0.00196 | 0.00192 | 0.00207 | 0.002 | 0.00198 |
| Total Cl | eqv/g | 0.00006 | 0.00006 | 0.00008 | 0.00008 | 0.00007 |
| Free Cl | eqv/g | 0.000002 | 0.000002 | 0.000002 | 0.000002 | 0.000003 |
| Cl(-$SO_2$Cl) | eqv/g | 0.00005 | 0.00006 | 0.00008 | 0.00008 | 0.00007 |
| S (-$SO_3$H) | eqv/g | 0.00191 | 0.00186 | 0.00199 | 0.00192 | 0.00191 |
| S (-$SO_2$Cl) | eqv/g | 0.00005 | 0.00006 | 0.00008 | 0.00008 | 0.00007 |
| (-$SO_3$H) | mole frac. | 0.97297 | 0.96946 | 0.9615 | 0.96135 | 0.96583 |
| (-$SO_3$H) | in DS% | 27.73 | 26.85 | 29.13 | 27.98 | 27.72 |
| (-$SO_2$Cl) | mole frac. | 0.02703 | 0.03054 | 0.0385 | 0.03865 | 0.03417 |
| (-$SO_2$Cl) | in DS% | 0.77 | 0.85 | 1.17 | 1.12 | 0.98 |
| [-$SO_2$Cl]/[-$SO_3$H] | | 0.03 | 0.03 | 0.04 | 0.04 | 0.04 |
| IEC | meq/g | 1.95 | 1.89 | 2.03 | 1.96 | 1.95 |

Table 3 (cont.)

| | Unit | E7 | E8 | E9 | E10 | E11 | E12 |
|---|---|---|---|---|---|---|---|
| Batch Size | g of PPO | 250 | 250 | 8750 | 8750 | 8750 | 8750 |
| EDC/PPO | wt/wt | 9.39 | 9.39 | 9.39 | 9.39 | 9.39 | 9.39 |
| EA/PPO | wt/wt | 0.61 | 0.61 | 0.61 | 0.61 | 0.61 | 0.61 |
| CSA/PPO | wt/wt | 0.57 | 0.57 | 0.512 | 0.49 | 0.47 | 0.45 |
| $N_2$ sweep rate | ml/min | 100 | 100 | 1000 | 1000 | 1000 | 1000 |
| Normalized $N_2$ sweep rate | (ml/min)/ mol CSA | 81.8 | 81.8 | 26 | 27.2 | 28.3 | 29.6 |
| Agitation | RPM | 250 | 250 | 115 | 115 | 115 | 115 |
| Total DS | % | 27.4 | 30 | 31.8 | 26.1 | 24.6 | 22.7 |
| Total S | eqv/g | 0.0019 | 0.00205 | 0.00215 | 0.00182 | 0.00173 | 0.00161 |
| Total Cl | eqv/g | 0.00007 | 0.00008 | 0.00013 | 0.0001 | 0.0001 | 0.00009 |
| Free Cl | eqv/g | 0.000002 | 0.000003 | 0.000002 | 0.000005 | 0.000001 | 0.000002 |
| Cl (-$SO_2$Cl) | eqv/g | 0.00007 | 0.00007 | 0.00013 | 0.00009 | 0.0001 | 0.0001 |
| S (-$SO_3$H) | eqv/g | 0.00183 | 0.00198 | 0.00203 | 0.00173 | 0.00163 | 0.00153 |
| S (-$SO_2$Cl) | eqv/g | 0.00007 | 0.00007 | 0.00013 | 0.00009 | 0.0001 | 0.00009 |
| (-$SO_3$H) | mole frac. | 0.96552 | 0.96464 | 0.94136 | 0.94834 | 0.94282 | 0.94334 |
| (-$SO_3$H) | in DS% | 26.46 | 28.94 | 29.94 | 24.75 | 23.19 | 21.41 |
| (-$SO_2$Cl) | mole frac. | 0.03448 | 0.03536 | 0.05864 | 0.05166 | 0.05718 | 0.05666 |

(continued)

| | Unit | E7 | E8 | E9 | E10 | E11 | E12 |
|---|---|---|---|---|---|---|---|
| ($-SO_2Cl$) | in DS% | 0.94 | 1.06 | 1.86 | 1.35 | 1.41 | 1.29 |
| $[-SO_2Cl]/[-SO_3H]$ | | 0.04 | 0.04 | 0.06 | 0.05 | 0.06 | 0.06 |
| IEC | meq/g | 1.87 | 2.02 | 2.07 | 1.77 | 1.67 | 1.56 |

As shown in Tables 2 and 3, the process described herein provided sulfonated poly(phenylene ether) products having a degree of sulfonation (DS) of 16.8 to 31.8%. This total degree of sulfonation includes $-SO_3H$ and $-SO_2Cl$ groups. By analyzing the total and free amounts of elemental S and Cl using CHNS, combustion ion chromatography, and extractible ion chromatography, as described above, the degree of sulfonation could be further broken down into percent of $-SO_3H$ and percent of $-SO_2Cl$ which contribute to the total DS.

Table 3 further indicates a relationship between the rate of the nitrogen sweep in the headspace during the sulfonation reaction and the resulting $-SO_2Cl$ content. Examples 2-8, which used a $N_2$ sweep at a rate of 50-100 ml/min (corresponding to a normalized $N_2$ sweep rate of 81.8 to 204.4 ml/min per mole of CSA), exhibited a $-SO_2Cl$ content of less than 1.2% (e.g., 0.77-1.17%). Examples 2-8 each exhibited a molar ratio of $-SO_2Cl$:$-SO_3H$ of 0.04 or less (e.g., 0.03 to 0.04).

Each of these examples further retained high molecular weights, as shown in Table 2, with a Mn of 77,000 to 97,000 grams per mole, a Mw of 158,000 to 190,000, and a dispersity of 2.0 to 2.1. Oligomer content was also advantageously minimized, with each example having 0.5 weight percent or less of an oligomer having a molecular weight of 1000 amu or less. Oligomers having a molecular weight of 500 amu or less were limited to 0.4 weight percent or less.

Examples 1 and 9-12 each exhibited a $-SO_2Cl$ content of 0.92-1.86, and a molar ratio of $-SO_2Cl$:$-SO_3H$ of 0.05 to 0.06. It is noted that the $N_2$ sweep rate for examples 1 and 9-12 was less than the $N_2$ sweep rate for examples 2-8 at equivalent reaction masses (see, e.g., "Normalized $N_2$ sweep" in Table 3, where the $N_2$ sweep rate has been normalized based on the amount (e.g., moles) of CSA used).

Table 3 also indicates that, in general, samples having a reduced $-SO_2Cl$ content (e.g., a $DS_{SO2Cl}$ of 0.77 to 1.17% and a molar ratio of $-SO_2Cl$:$-SO_3H$ of 0.04 or less) exhibited increased IEC (e.g., an IEC of 1.87 meq per gram or more). Examples with higher $SO_2Cl$ content (e.g., a $DS_{SO2Cl}$ of 0.92-1.86%) generally exhibited reduced IEC (e.g., 1.17-1.77 meq per gram or less).

Accordingly, a sulfonated poly(phenylene ether) having a combination of degree of sulfonation of 20-50%, a number average molecular weight of 60,000 to 100,000 grams per mole, a dispersity of 2.0 to 2.1, and a reduced amount of $-SO_2Cl$ is advantageously provided by the present disclosure.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl ($-HC=CH_2$)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene ($-CH_2-$) or, propylene ($-(CH_2)_3-$)). "Cycloalkylene" means a divalent cyclic alkylene group, $-C_nH_{2n-x}$, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a $C_{1-9}$ alkoxy, a $C_{1-9}$ haloalkoxy, a nitro ($-NO_2$), a cyano (-CN), a $C_{1-6}$ alkyl sulfonyl ($-S(=O)_2$-alkyl), a $C_{6-12}$ aryl sulfonyl ($-S(=O)_2$-aryl), a thiol (-SH), a thiocyano (-SCN), a tosyl ($CH_3C_6H_4SO_2-$), a $C_{3-12}$ cycloalkyl, a $C_{2-12}$ alkenyl, a $C_{5-12}$ cycloalkenyl, a $C_{6-12}$ aryl, a $C_{7-13}$ arylalkylene, a $C_{4-12}$ heterocycloalkyl, and a $C_{3-12}$ heteroaryl instead of hydrogen, provided that the substituted atom's normal valence is not exceeded. The number of carbon atoms indicated in a group is exclusive of any substituents. For example - $CH_2CH_2CN$ is a $C_2$ alkyl group substituted with a nitrile.

## Claims

1. A sulfonated poly(phenylene ether) comprising:

repeating units of the formula

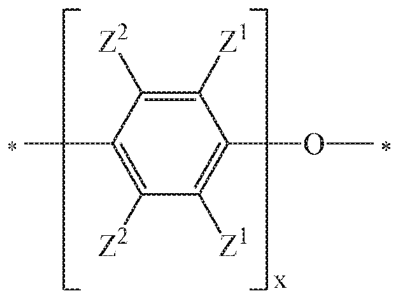

a degree of sulfonation of 20 to 50% as determined by nuclear magnetic resonance spectroscopy; and
a sulfonyl chloride ($-SO_2Cl$):sulfonic acid ($-SO_3H$) molar ratio of less than or equal to 0.06, wherein the concentrations of sulfonyl chloride and sulfonic acid are detemined by measuring the total concentration of elemental sulfur (S) and chlorine (Cl) using elemental analysis using CHNS and combustion ion chromatography, respectively;
wherein in the foregoing formula,

$Z^1$ is independently at each occurrence a sulfonic acid group, a sulfonyl chloride group, halogen, unsubstituted or substituted $C_1$-$_{12}$ hydrocarbyl provided that the hydrocarbyl group is not tertiary hydrocarbyl, $C_1$-$_{12}$ hydrocarbylthio, $C_1$-$_{12}$ hydrocarbyloxy, or $C_{2-12}$ halohydrocarbyloxy wherein at least two carbon atoms separate the halogen and oxygen atoms;

$Z^2$ is independently at each occurrence a sulfonic acid group, a sulfonyl chloride group, hydrogen, halogen, unsubstituted or substituted $C_{1-12}$ hydrocarbyl provided that the hydrocarbyl group is not tertiary hydrocarbyl, $C_{1-12}$ hydrocarbylthio, $C_{1-12}$ hydrocarbyloxy, or $C_{2-12}$ halohydrocarbyloxy wherein at least two carbon atoms separate the halogen and oxygen atoms; and
x is 1 or 2.

**2.** The sulfonated poly(phenylene ether) of claim 1, wherein the sulfonyl chloride ($-SO_2Cl$):sulfonic acid ($-SO_3H$) molar ratio is less than or equal to 0.05, or less than 0.05, or less than or equal to 0.04, or greater than 0 to 0.04, or 0.001 to 0.04, or 0.01 to 0.04, or 0.02 to 0.04, or 0.03 to 0.04, wherein the concentrations of sulfonyl chloride and sulfonic acid are detemined by measuring the total concentration of elemental sulfur (S) and chlorine (Cl) using elemental analysis using CHNS and combustion ion chromatography, respectively.

**3.** The sulfonated poly(phenylene ether) of claim 1 or 2, wherein the sulfonated poly(phenylene ether) comprises 2,6-dimethyl-1,4-phenylene ether repeating units, 2,3,6-trimethyl-1,4-phenylene ether units, 2,5-dimethyl-1,4-phenylene ether repeating units, 2,2',5,5'-tetramethyl-4,4'-dihydroxybiphenyl ether repeating units, 2-methyl-6-phenyl-1,4-phenylene ether repeating units, 2,2'-dimethyl-6,6'-diphenyl-4,4'-dihydroxybiphenyl ether repeating units, 2,6-diphenyl-1,4-phenylene ether repeating units, 2,2',6,6'-tetraphenyl-4,4'-dihydroxybiphenyl ether repeating units, 2,6-dimethoxy-1,4-phenylene ether repeating units, 2,2'-6,6'-tetramethoxy-4,4'-dihydroxybiphenyl ether, 3,3',5,5'-tetramethyl-4,4'-dihydroxybiphenyl ether units, a sulfonated derivative thereof, or a combination thereof.

**4.** The sulfonated poly(phenylene ether) of any of claims 1 to 3, wherein the sulfonated poly(phenylene ether) has

a number average molecular weight of 60,000 to 100,000 grams per mole,
a weight average molecular weight of 130,000 to 200,000 grams per mole, and
a dispersity of 1.8 to 2.5,
wherein number average molecular weight, weight average molecular weight, and dispersity are determined using gel permeation chromatography in dimethyl formamide relative to polystyrene standards.

**5.** The sulfonated poly(phenylene ether) of any of claims 1 to 4, wherein the sulfonated poly(phenylene ether) comprises less than 1 weight percent, or less than 0.75 weight percent, or less than 0.5 weight percent of an oligomer having a molecular weight of less than 1,000 grams per mole, wherein weight percent is based on the total weight of the sulfonated poly(phenylene ether).

**6.** The sulfonated poly(phenylene ether) of any of claims 1 to 5, wherein the sulfonated poly(phenylene ether) comprises less than 0.7 weight percent, or less than 0.5 weight percent, or less than 0.4 weight percent of an oligomer having a molecular weight of less than 500 grams per mole, wherein weight percent is based on the total weight of the sulfonated poly(phenylene ether).

**7.** The sulfonated poly(phenylene ether) of any of claims 1 to 6, wherein the sulfonated poly(phenylene ether) exhibits an ion exchange capacity of 1.5 to 2.5 milliequivalents per gram of sulfonated poly(phenylene ether), wherein the ion exchange capacity is determined as disclosed in the description.

**8.** The sulfonated poly(phenylene ether) of claim 1, comprising

sulfonated 2,6-dimethyl-1,4-phenylene ether units;
a degree of sulfonation of 20 to 35%;
sulfonyl chloride ($-SO_2Cl$):sulfonic acid ($-SO_3H$) molar ratio of 0.01 to 0.04; and
less than 0.5 weight percent of an oligomer having a molecular weight of less than 1,000 grams per mole, wherein weight percent is based on the total weight of the sulfonated poly(phenylene ether);
wherein the sulfonated poly(phenylene ether) has
a number average molecular weight of 60,000 to 100,000 grams per mole,
a weight average molecular weight of 130,000 to 200,000 grams per mole,
a dispersity of 1.8 to 2.5, wherein number average molecular weight, weight average molecular weight, and dispersity are determined using gel permeation chromatography in dimethyl formamide relative to polystyrene standards, and
an ion exchange capacity of 1.2 to 2.5 milliequivalents per gram of sulfonated poly(phenylene ether), wherein the ion exchange capacity is determined as disclosed in the description.

**9.** The sulfonated poly(phenylene ether) of any of claims 1 to 8, wherein the sulfonated poly(phenylene ether) is made by a method comprising

dissolving a poly(phenylene ether) in 1,2-dichloroethane to form a mixture;
combining a sulfonating agent and a cosolvent, preferably ethyl acetate, with the mixture to form the sulfonated poly(phenylene ether), wherein nitrogen gas is passed over the mixture at a flow rate of greater than or equal to 25 milliliters per minute per mole of sulfonating agent;
precipitating the sulfonated poly(phenylene ether); and
isolating the precipitated sulfonated poly(phenylene ether).

**10.** A method of making the sulfonated poly(phenylene ether) of any of claims 1 to 9, the method comprising:

dissolving a poly(phenylene ether) in 1,2-dichloroethane to form a mixture;
combining a sulfonating agent and a cosolvent, preferably ethyl acetate, with the mixture to form the sulfonated poly(phenylene ether), wherein nitrogen gas is passed over the mixture at a flow rate of greater than or equal to 30 milliliters per minute per mole of sulfonating agent;
precipitating the sulfonated poly(phenylene ether); and
isolating the precipitated sulfonated poly(phenylene ether).

**11.** The method of claim 10, wherein the dissolving is at a temperature of 30°C to 85°C.

**12.** The method of claim 10 or 11, wherein the mixture comprises

1 to 20 wt% of the poly(phenylene ether); and
80 to 99 wt% of the 1,2-dichloroethane,

**13.** The method of any of claims 10 to 12, wherein the sulfonating agent and the cosolvent are present in a weight ratio of 1:1.5 to 1.5 to 1, preferably 1:1.1 to 1.1:1.

**14.** A membrane comprising the sulfonated poly(phenylene ether) of any of claims 1 to 9.

**15.** The membrane of claim 14, wherein the membrane is an ion exchange membrane or a gas separation membrane.

## Patentansprüche

**1.** Sulfonierter Poly(phenylenether), umfassend:

sich wiederholende Einheiten der Formel

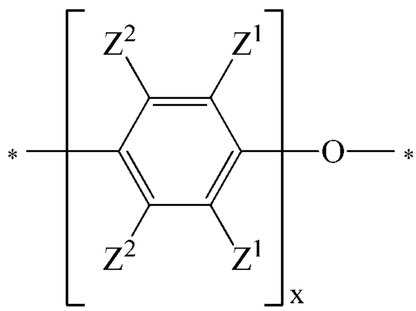

einen Sulfonierungsgrad von 20 bis 50 %, bestimmt durch Kernspinresonanzspektroskopie; und
ein Molverhältnis von Sulfonylchlorid ($-SO_2Cl$) : Sulfonsäure ($-SO_3H$) von weniger als oder gleich 0,06; wobei die Konzentrationen von Sulfonylchlorid und Sulfonsäure durch Messung der Gesamtkonzentration von elementarem Schwefel (S) und Chlor (Cl) mittels Elementaranalyse unter Verwendung von CHNS bzw. Verbrennungsionenchromatographie bestimmt werden;
wobei in der vorstehenden Formel

$Z^1$ unabhängig bei jedem Vorkommen eine Sulfonsäuregruppe, eine Sulfonylchloridgruppe, Halogen, unsubstituiertes oder substituiertes $C_{1-12}$ Hydrocarbyl, vorausgesetzt, dass die Hydrocarbylgruppe kein tertiäres Hydrocarbyl ist, $C_{1-12}$ Hydrocarbylthio, $C_{1-12}$ Hydrocarbyloxy oder $C_{2-12}$ Halogenhydrocarbyloxy ist, wobei mindestens zwei Kohlenstoffatome die Halogen- und Sauerstoffatome trennen;
$Z^2$ unabhängig bei jedem Vorkommen eine Sulfonsäuregruppe, eine Sulfonylchloridgruppe, Wasserstoff, Halogen, unsubstituiertes oder substituiertes $C_{1-12}$ Hydrocarbyl, vorausgesetzt, dass die Hydrocarbylgruppe kein tertiäres Hydrocarbyl ist, $C_{1-12}$ Hydrocarbylthio, $C_{1-12}$ Hydrocarbyloxy oder $C_{2-12}$ Halogenhydrocarbyloxy ist, wobei mindestens zwei Kohlenstoffatome die Halogen- und Sauerstoffatome trennen; und
x 1 oder 2 ist.

2. Sulfonierter Poly(phenylenether) nach Anspruch 1, wobei das Molverhältnis von Sulfonylchlorid ($-SO_2Cl$) : Sulfonsäure ($-SO_3H$) kleiner oder gleich 0,05 oder kleiner als 0,05 oder kleiner oder gleich 0,04, oder größer als 0 bis 0,04, oder 0,001 bis 0,04, oder 0,01 bis 0,04, oder 0,02 bis 0,04, oder 0,03 bis 0,04 ist, wobei die Konzentrationen von Sulfonylchlorid und Sulfonsäure durch Messung der Gesamtkonzentration an elementarem Schwefel (S) und Chlor (Cl) mittels Elementaranalyse unter Verwendung von CHNS bzw. Verbrennungsionenchromatographie bestimmt werden.

3. Sulfonierter Poly(phenylenether) nach Anspruch 1 oder 2, wobei der sulfonierte Poly(phenylenether) 2,6-Dimethyl-1,4-phenylenether-Wiederholungseinheiten, 2,3,6-Trimethyl-1,4-phenylether-Einheiten, 2,5-Dimethyl-1,4-phenylether-Wiederholungseinheiten, 2,2',5,5'-Tetramethyl-4,4'-dihydroxybiphenylether-Wiederholungseinheiten, 2-Methyl-6-phenyl-1,4-phenylether-Wiederholungseinheiten, 2,2'-Dimethyl-6,6'-diphenyl-4,4'-dihydroxybiphenylether-Wiederholungseinheiten, 2,6-Diphenyl-1,4-phenylenether-Wiederholungseinheiten, 2,2',6,6'-Tetraphenyl-4,4'-dihydroxybiphenylether-Wiederholungseinheiten, 2,6-Dimethoxy-1,4-phenylether-Wiederholungseinheiten, 2,2'-6,6'-Tetramethoxy-4,4'-dihydroxybiphenylether, 3,3',5,5'-Tetramethyl-4,4'-dihydroxybiphenyl-Ethereinheiten, ein sulfoniertes Derivat oder eine Kombination davon, umfasst.

4. Sulfonierter Poly(phenylenether) gemäß einem der Ansprüche 1 bis 3, wobei der sulfonierte Poly(phenylenether)

ein zahlenmittleres Molekulargewicht von 60.000 bis 100.000 Gramm pro Mol,
ein gewichtsmittleres Molekulargewicht von 130.000 bis 200.000 Gramm pro Mol und
eine Dispersität von 1,8 bis 2,5 aufweist,
wobei das zahlenmittlere Molekulargewicht, das gewichtsmittlere Molekulargewicht und die Dispersität unter Verwendung von Gelpermeationschromatographie in Dimethylformamid relativ zu Polystyrolstandards bestimmt werden.

5. Sulfonierter Poly(phenylenether) nach einem der Ansprüche 1 bis 4, wobei der sulfonierte Poly(phenylenether) weniger als 1 Gewichtsprozent oder weniger als 0,75 Gewichtsprozent oder weniger als 0,5 Gewichtsprozent eines Oligomers mit einem Molekulargewicht von weniger als 1.000 Gramm pro Mol umfasst, wobei Gewichtsprozent auf dem Gesamtgewicht des sulfonierten Poly(Phenylenethers) basiert.

6. Sulfonierter Poly(phenylenether) gemäß einem der Ansprüche 1 bis 5, wobei der sulfonierte Poly(phenylenether) weniger als 0,7 Gewichtsprozent oder weniger als 0,5 Gewichtsprozent oder weniger als 0,4 Gewichtsprozent eines Oligomers mit einem Molekulargewicht von weniger als 500 Gramm pro Mol umfasst, wobei Gewichtsprozent auf dem Gesamtgewicht des sulfonierten Poly(phenylenethers) basiert.

7. Sulfonierter Poly(phenylenether) nach einem der Ansprüche 1 bis 6, wobei der sulfonierte Poly(phenylenether) eine Ionenaustauschkapazität von 1,5 bis 2,5 Milliäquivalenten pro Gramm sulfoniertem Poly(phenylenether) aufweist, wobei die Ionenaustauschkapazität wie in der Beschreibung offenbart bestimmt wird.

8. Sulfonierter Poly(phenylenether) gemäß Anspruch 1, umfassend sulfonierte 2,6-Dimethyl-1,4-phenylether-Einheiten;

einen Sulfonierungsgrad von 20 bis 35 %;
ein Molverhältnis von Sulfonylchlorid ($-SO_2Cl$) : Sulfonsäure ($-SO_3H$) von 0,01 bis 0,04; und weniger als 0,5 Gewichtsprozent eines Oligomers mit einem Molekulargewicht von weniger als 1.000 Gramm pro Mol, wobei das Gewichtsprozent auf dem Gesamtgewicht des sulfonierten Poly(phenylenethers) basiert;
wobei der sulfonierte Poly(phenylenether)
ein zahlenmittleres Molekulargewicht von 60.000 bis 100.000 Gramm pro Mol,

ein gewichtsmittleres Molekulargewicht von 130.000 bis 200.000 Gramm pro Mol,
eine Dispersität von 1,8 bis 2,5 aufweist, wobei das zahlenmittlere Molekulargewicht, das gewichtsmittlere Molekulargewicht und die Dispersität unter Verwendung von Gelpermeationschromatographie in Dimethylformamid relativ zu Polystyrolstandards bestimmt werden, und
eine Ionenaustauschkapazität von 1,2 bis 2,5 Milliequivalenten pro Gramm sulfoniertem Poly(phenylenether), wobei die Ionenaustauschkapazität wie in der Beschreibung offenbart bestimmt wird.

**9.** Sulfonierter Poly(phenylenether) nach einem der Ansprüche 1 bis 8, wobei der sulfonierte Poly(phenylenether) durch ein Verfahren hergestellt wird, das Folgendes umfasst:

Auflösen eines Poly(phenylenethers) in 1,2-Dichlorethan zur Bildung einer Mischung;
Kombinieren eines Sulfonierungsmittels und eines Co-Lösungsmittels, vorzugsweise Ethylacetat, mit der Mischung, um das sulfonierte Poly(phenylenether) zu bilden, wobei Stickstoffgas mit einer Durchflussrate von größer oder gleich 25 Millilitern pro Minute pro Mol Sulfonierungsmittel über die Mischung geleitet wird;
Ausfällen des sulfonierten Poly(phenylenethers); und
Isolieren des ausgefällten sulfonierten Poly(phenylenethers).

**10.** Verfahren zur Herstellung des sulfonierten Poly(phenylenethers) nach einem der Ansprüche 1 bis 9, wobei das Verfahren Folgendes umfasst:

Auflösen eines Poly(phenylenethers) in 1,2-Dichlorethan zur Bildung einer Mischung;
Kombinieren eines Sulfonierungsmittels und eines Co-Lösungsmittels, vorzugsweise Ethylacetat, mit der Mischung, um das sulfonierte Poly(phenylenether) zu bilden, wobei Stickstoffgas mit einer Durchflussrate von größer oder gleich 30 Millilitern pro Minute pro Mol Sulfonierungsmittel über die Mischung geleitet wird;
Ausfällen des sulfonierten Poly(phenylenethers); und
Isolieren des ausgefällten sulfonierten Poly(phenylenethers).

**11.** Verfahren nach Anspruch 10, wobei das Auflösen bei einer Temperatur von 30 °C bis 85 °C erfolgt.

**12.** Verfahren nach Anspruch 10 oder 11, wobei die Mischung

1 bis 20 Gew.-% des Poly(phenylenethers) und
80 bis 99 Gew.-% des 1,2-Dichlorethans,
umfasst.

**13.** Verfahren nach einem der Ansprüche 10 bis 12, wobei das Sulfonierungsmittel und das Co-Lösungsmittel in einem Gewichtsverhältnis von 1:1,5 bis 1,5:1, vorzugsweise 1:1,1 bis 1,1:1, vorliegen.

**14.** Membran, die den sulfonierten Poly(phenylenether) gemäß einem der Ansprüche 1 bis 9 umfasst.

**15.** Membran nach Anspruch 14, wobei die Membran eine Ionenaustauschmembran oder eine Gastrennmembran ist.

## Revendications

**1.** Poly(phénylène éther) sulfoné comprenant :

des motifs répétitifs de formule

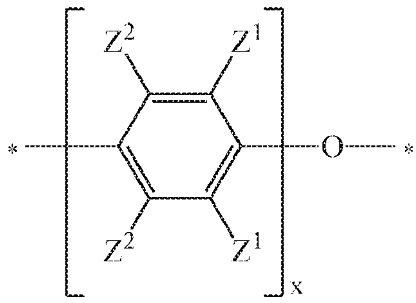

un degré de sulfonation de 20 à 50 % tel que déterminé par spectroscopie par résonance magnétique nucléaire ; et

un rapport molaire chlorure de sulfonyle ($-SO_2Cl$) / acide sulfonique ($-SO_3H$) inférieur ou égal à 0,06, dans lequel les concentrations en chlorure de sulfonyle et en acide sulfonique sont déterminées par mesure de la concentration totale de soufre (S) et de chlore (Cl) élémentaires utilisant une analyse élémentaire utilisant CHNS et une chromatographie ionique de combustion, respectivement ;

dans lequel, dans la formule ci-dessus,

$Z^1$ est indépendamment à chaque occurrence un groupe acide sulfonique, un groupe chlorure de sulfonyle, un halogène, un hydrocarbyle en $C_1$ à $C_{12}$ substitué ou non substitué sous réserve que le groupe hydrocarbyle ne soit pas un hydrocarbyle tertiaire, un hydrocarbylthio en $C_1$ à $C_{12}$, un hydrocarbyloxy en $C_1$ à $C_{12}$, ou un halogénohydrocarbyloxy en $C_2$ à $C_{12}$ dans lequel au moins deux atomes de carbone séparent les atomes d'halogène et d'oxygène ;

$Z^2$ est indépendamment à chaque occurrence un groupe acide sulfonique, un groupe chlorure de sulfonyle, un hydrogène, un halogène, un hydrocarbyle en $C_1$ à $C_{12}$ substitué ou non substitué sous réserve que le groupe hydrocarbyle ne soit pas un hydrocarbyle tertiaire, un hydrocarbylthio en $C_1$ à $C_{12}$, un hydrocarbyloxy en $C_1$ à $C_{12}$, ou un halogénohydrocarbyloxy en $C_2$ à $C_{12}$ dans lequel au moins deux atomes de carbone séparent les atomes d'halogène et d'oxygène ; et

x vaut 1 ou 2.

**2.** Poly(phénylène éther) sulfoné selon la revendication 1, dans lequel le rapport molaire chlorure de sulfonyle ($-SO_2Cl$) / acide sulfonique ($-SO_3H$) est inférieur ou égal à 0,05, ou inférieur à 0,05, ou inférieur ou égal à 0,04, ou de plus de 0 à 0,04, ou de 0,001 à 0,04, ou de 0,01 à 0,04, ou de 0,02 à 0,04, ou de 0,03 à 0,04, dans lequel les concentrations en chlorure de sulfonyle et en acide sulfonique sont déterminées par mesure de la concentration totale de soufre (S) et de chlore (Cl) élémentaires utilisant une analyse élémentaire utilisant CHNS et une chromatographie ionique de combustion, respectivement.

**3.** Poly(phénylène éther) sulfoné selon la revendication 1 ou 2, dans lequel le poly(phénylène éther) sulfoné comprend des motifs répétitifs 2,6-diméthyl-1,4-phénylène-éther, des motifs 2,3,6-triméthyl-1,4-phénylène-éther, des motifs répétitifs 2,5-diméthyl-1,4-phénylène-éther, des motifs répétitifs 2,2',5,5'-tétraméthyl-4,4'-dihydroxybiphényl-éther, des motifs répétitifs 2-méthyl-6-phényl-1,4-phénylène-éther, des motifs répétitifs 2,2'-diméthyl-6,6'-diphényl-4,4'-dihydroxybiphényl-éther, des motifs répétitifs 2,6-diphényl-1,4-phénylène-éther, des motifs répétitifs 2,2',6,6'-tétraphényl-4,4'-dihydroxybiphényl-éther, des motifs répétitifs 2,6-diméthoxy-1,4-phénylène-éther, du 2,2',6,6'-tétraméthoxy-4,4'-dihydroxybiphényl-éther, des motifs 3,3'-5,5'-tétraméthyl-4,4'-dihydroxybiphényl-éther, un dérivé sulfoné de ceux-ci, ou une combinaison de ceux-ci.

**4.** Poly(phénylène éther) sulfoné selon l'une quelconque des revendications 1 à 3, dans lequel le poly(phénylène éther) sulfoné a

une masse moléculaire moyenne en nombre de 60 000 à 100 000 grammes par mole,
une masse moléculaire moyenne en masse de 130 000 à 200 000 grammes par mole, et
une dispersité de 1,8 à 2,5,
dans lequel la masse moléculaire moyenne en nombre, la masse moléculaire moyenne en masse et la dispersité sont déterminées par utilisation d'une chromatographie par perméation de gel dans du diméthylformamide relativement à des étalons en polystyrène.

**5.** Poly(phénylène éther) sulfoné selon l'une quelconque des revendications 1 à 4, dans lequel le poly(phénylène éther) sulfoné comprend moins de 1 % en poids, ou moins de 0,75 % en poids, ou moins de 0,5 % en poids d'un oligomère

ayant une masse moléculaire inférieure à 1 000 grammes par mole, dans lequel le pourcentage en poids est basé sur le poids total du poly(phénylène éther) sulfoné.

**6.** Poly(phénylène éther) sulfoné selon l'une quelconque des revendications 1 à 5, dans lequel le poly(phénylène éther) sulfoné comprend moins de 0,7 % en poids, ou moins de 0,5 % en poids, ou moins de 0,4 % en poids d'un oligomère ayant une masse moléculaire inférieure à 500 grammes par mole, dans lequel le pourcentage en poids est basé sur le poids total du poly(phénylène éther) sulfoné.

**7.** Poly(phénylène éther) sulfoné selon l'une quelconque des revendications 1 à 6, dans lequel le poly(phénylène éther) sulfoné présente une capacité d'échange d'ions de 1,5 à 2,5 milliéquivalents par gramme de poly(phénylène éther) sulfoné, dans lequel la capacité d'échange d'ions est déterminée comme exposé dans la description.

**8.** Poly(phénylène éther) sulfoné selon la revendication 1, comprenant

des motifs 2,6-diméthyl-1,4-phénylène-éther sulfoné ;
un degré de sulfonation de 20 à 35 % ;
un rapport molaire chlorure de sulfonyle ($-SO_2Cl$) / acide sulfonique ($-SO_3H$) de 0,01 à 0,04 ; et
moins de 0,5 % en poids d'un oligomère ayant une masse moléculaire inférieure à 1 000 grammes par mole, dans lequel le pourcentage en poids est basé sur le poids total du poly(phénylène éther) sulfoné ;
dans lequel le poly(phénylène éther) sulfoné a
une masse moléculaire moyenne en nombre de 60 000 à 100 000 grammes par mole,
une masse moléculaire moyenne en masse de 130 000 à 200 000 grammes par mole,
une dispersité de 1,8 à 2,5,
dans lequel la masse moléculaire moyenne en nombre, la masse moléculaire moyenne en masse et la dispersité sont déterminées par utilisation d'une chromatographie par perméation de gel dans du diméthylformamide relativement à des étalons en polystyrène, et
une capacité d'échange d'ions de 1,2 à 2,5 milliéquivalents par gramme de poly(phénylène éther) sulfoné, dans lequel la capacité d'échange d'ions est déterminée comme exposé dans la description.

**9.** Poly(phénylène éther) sulfoné selon l'une quelconque des revendications 1 à 8, dans lequel le poly(phénylène éther) sulfoné est préparé par une méthode comprenant

la dissolution d'un poly(phénylène éther) dans du 1,2-dichloroéthane pour former un mélange ;
la combinaison d'un agent de sulfonation et d'un cosolvant, de préférence l'acétate d'éthyle, avec le mélange pour former le poly(phénylène éther) sulfoné, dans laquelle de l'azote gazeux passe sur le mélange à un débit supérieur ou égal à 25 millilitres par minute par mole d'agent de sulfonation ;
la précipitation du poly(phénylène éther) sulfoné ; et
l'isolement du poly(phénylène éther) sulfoné précipité.

**10.** Méthode de préparation du poly(phénylène éther) sulfoné selon l'une quelconque des revendications 1 à 9, la méthode comprenant :

la dissolution d'un poly(phénylène éther) dans du 1,2-dichloroéthane pour former un mélange ;
la combinaison d'un agent de sulfonation et d'un cosolvant, de préférence l'acétate d'éthyle, avec le mélange pour former le poly(phénylène éther) sulfoné, dans laquelle de l'azote gazeux passe sur le mélange à un débit supérieur ou égal à 30 millilitres par minute par mole d'agent de sulfonation ;
la précipitation du poly(phénylène éther) sulfoné ; et
l'isolement du poly(phénylène éther) sulfoné précipité.

**11.** Méthode selon la revendication 10, dans laquelle la dissolution est à une température de 30 °C à 85 °C.

**12.** Méthode selon la revendication 10 ou 11, dans laquelle le mélange comprend

1 à 20 % en poids de poly(phénylène éther) ; et
80 à 99 % en poids de 1,2-dichloroéthane.

**13.** Méthode selon l'une quelconque des revendications 10 à 12, dans laquelle l'agent de sulfonation et le cosolvant sont présents en un rapport en poids de 1/1,5 à 1,5 à 1, de préférence de 1/1,1 à 1,1/1.

**14.** Membrane comprenant le poly(phénylène éther) sulfoné selon l'une quelconque des revendications 1 à 9.

**15.** Membrane selon la revendication 14, dans laquelle la membrane est une membrane échangeuse d'ions ou une membrane de séparation de gaz.

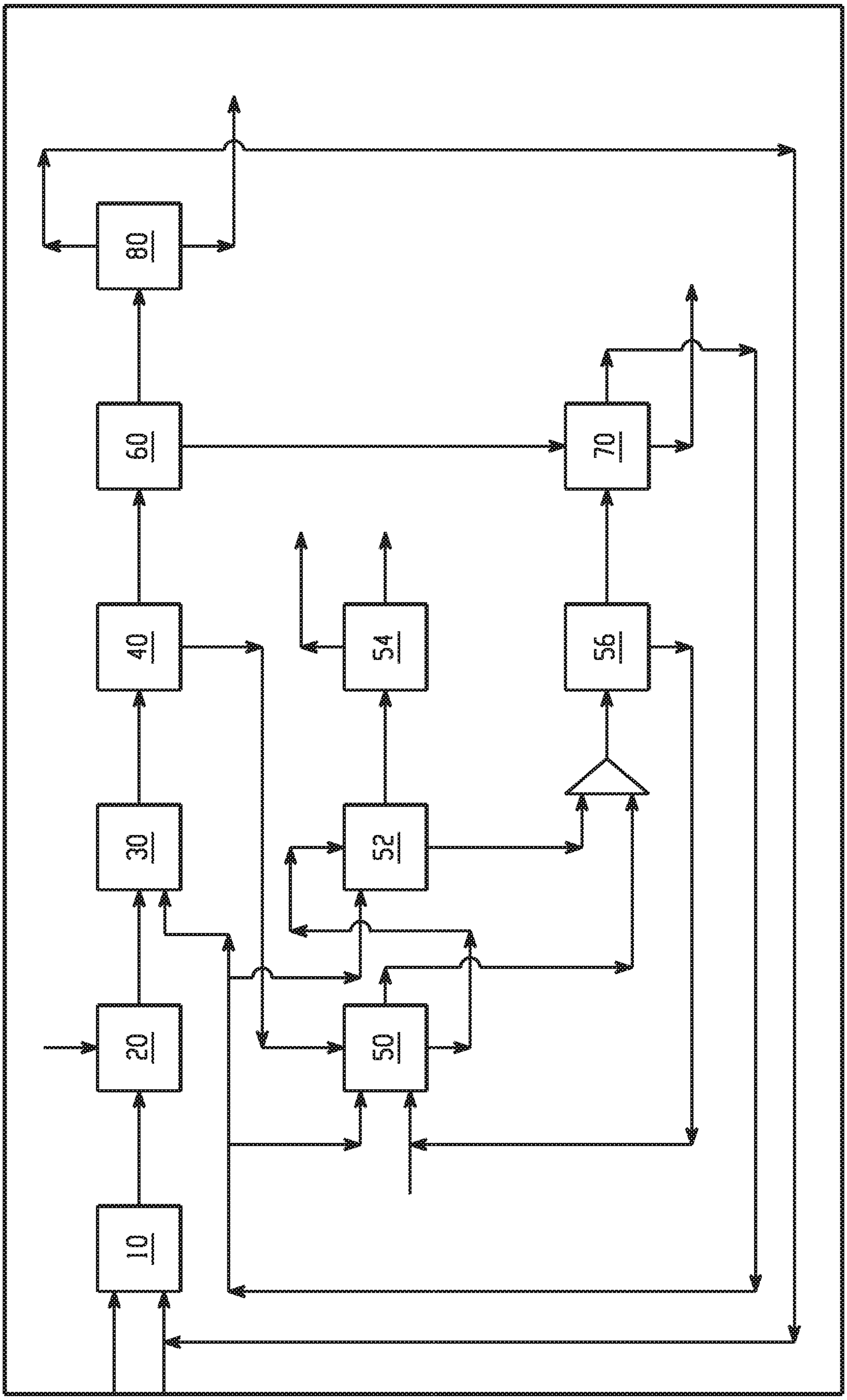


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 22178729
- WO 2020254885 A1
- WO 2020254885 A